(19) Europäisches Patentamt / European Patent Office / Office européen des brevets

(11) **EP 2 597 112 A1**

(12) **EUROPEAN PATENT APPLICATION**

(43) Date of publication:
29.05.2013 Bulletin 2013/22

(51) Int Cl.:
*C08J 5/00* (2006.01)  *C08K 7/00* (2006.01)

(21) Application number: 11190729.1

(22) Date of filing: 25.11.2011

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: **The Provost, Fellows, Foundation Scholars, & the**
**other members of Board, of the College of the Holy**
**& Undiv. Trinity of Queen Elizabeth near Dublin**
**Dublin 2 (IE)**

(72) Inventors:
• **Coleman, Jonathan**
  **Dublin, Dublin 2 (IE)**
• **Khan, Umar**
  **Dublin, Dublin 2 (IE)**
• **Young, Karen**
  **Dublin, Dublin 2 (IE)**

(74) Representative: **Purdylucey Intellectual Property**
**6-7 Harcourt Terrace**
**Dublin 2 (IE)**

(54) **Process for producing a composite product by combination of solution and melt processing**

(57) A process for producing a composite product with increased tensile strength using 2-dimensional nano-sheets exfoliated from a 3-dimensional layered material, the process comprising the steps of exfoliating the 3-dimensional layered material in a solvent or a water-surfactant to provide dispersed 2-dimensional nano-sheets; adding the dispersed 2-dimensional nano-sheets to a liquid product while stirring, evaporating the solvent or water-surfactant to produce a homogenous composite material.

**Figure 1**

EP 2 597 112 A1

**Description**

**Field of the Invention**

The invention relates to reinforcement of synthetic plastics and adhesives. In particular, the invention relates to a composite product of 2-dimensional materials for use in thermoplastic and adhesive products.

**Background to the Invention**

Synthetic plastics are a very important part of modern life and are used extensively in applications in areas such as textiles, packaging and medical technology. Their widespread use is largely due to their high strength and low density but also due to their durability, abrasion resistance, and chemical and environment stability. Plastics are generally found as fibers or as bulk pieces.

Some of the most common structural thermoplastics are acrylonitrile butadiene styrene, polypropylene, polyethylene, polystyrene, polyvinylchloride, nylon, polyester, polyacrylic and polycarbonate. These materials have low densities in the range 900-1500 kg/m$^3$. They have good mechanical properties with moduli in the range 0.1-3 GPa and strength typically between 10 and 100 MPa. These materials are thermally processed and are produced in very large quantities for applications from bottles to bearings.

Polyester fibres are probably the most widespread form of synthetic polymeric fibre, while the most common polyester fibres are produced from poly(ethylene terephthalate) (PET). PET fibres are most widely used in textiles and can be produced with Young's modulus, strength and tensile toughness up to ~10 GPa, ~1 GPa and 200 MJ/m$^3$ respectively. In addition, these fibres are reasonably ductile with strain at break usually varying in the range ~20-100%. The strongest polyester fibre ever reported was produced from polyethylene naphthalate (PEN) and had modulus, strength and ductility of 26 GPa, 1.3 GPa and 7.6% respectively (assuming a density of 1.35 g/cc). However, while these mechanical properties are impressive, they cannot compare to high performance rigid rod polymeric fibres such as ultra-high molecular weight polyethylene (Dyneema®), polyparaphenylene terephthalamide (Kevlar®) and polypyridobisimidazole (PIPD) which can display modulus and strength as high as 330 GPa and 4 GPa respectively. However, one advantage of polyester fibres is that they can be melt-spun, cheaply and in large quantities. Thus, there would be significant advantages to modifying existing polyesters to produce fibres with enhanced mechanical properties.

Over the last decade, a lot of work has been done to reinforce plastics, both in bulk and fiber form, with nanoscale fillers. When stiff, strong, rod-like (or planar) fillers are added to polymers, the mechanical properties can be improved dramatically. The simplest possible model to describe this reinforcement is the rule of mixtures which predicts that the fibre modulus, Y, and strength, $\sigma_B$, depend on the filler volume fraction, $V_f$, by:

$$Y = \left(\eta_o \eta_{LY} Y_R - Y_P\right)V_f + Y_P \qquad (1)$$

$$\sigma_B = \left(\eta_o \eta_{L\sigma} \sigma_R - \sigma_P\right)V_f + \sigma_P \qquad (2)$$

Here the subscripts R and P refer to the reinforcing filler and the polymer respectively. In addition $\eta_o$ and $\eta_L$ are factors which vary between 0 and 1 and correct for the effects of nanotube orientation and length respectively. These expressions mean that the rate of increase in both fibre modulus and strength with filler content have upper limits given by $dY/dV_f \leq Y_R$ or $d\sigma_B/dV_f \leq \sigma_R$.

Due to their intrinsically high stiffness and strength, one of the most exciting filler materials of recent years have been carbon nanotubes. These high aspect ratio carbon cylinders have diameters of ~nm, lengths of ~microns and display superlative mechanical properties with modulus and strength up to 1 TPa and 50-150 GPa respectively. Some significant successes have been achieved by reinforcing polymers with carbon nanotubes. Polymer-carbon nanotube composite fibres have been produced using a range of matrices and spinning methods and in some cases have achieved exceptional mechanical properties, with a number of papers describing composite fibres with strength in excess of 1 GPa. However, in many cases the key to such impressive results has been the quality of the nanotube dispersion which is usually achieved through solution processing. This often means that the fibres have been formed from solution using methods such as coagulation spinning. This is unfortunate as many commercial plastic fibres are melt processed; it has proved more difficult to produce excellent composite fibres from the melt then from solution.

Surprisingly few publications have reported the reinforcement of polyester fibres. A small number of publications have described the reinforcement of PET fibres with carbon nanofibres or organoclays with limited improvements in mechanical properties. In addition, some publications have reported the production of nanotube-PET composite fibres. Of these, the most impressive results were those of Anand *et al.* (Anand, K. A.; Jose, T. S.; Agarwal, U. S.; Sreekumar, T. V.; Banwari, B.; Joseph, R., Pet-Swnt Nanocomposite Fibers through Melt Spinning. International Journal of Polymeric Materials 2010, 59, 438-449) who prepared composite fibres by melt compounding, followed by spinning and drawing. They obtained fibres with a modulus and strength of 15.9 GPa and 712 MPa respectively, significantly better than the pure polymer.

It is known that some nanotubes are present as large aggregates when melt mixed into PET. This is probably a result of incomplete exfoliation during mixing. Such aggregates act to concentrate stress and can precipitate failure. Another problem with using nanotubes as a filler, is that those types of nanotube with high strength (*i.e.* single walled nanotubes) tend to be extremely expensive (-$500/g).

It is an object of the present invention to provide reinforced polymer fibres, reinforced plastics and improved adhesive products which overcome at least some of the above-mentioned problems.

## Summary of the Invention

According to the present invention there is provided, as set out in the appended claims, a process for producing a composite product using 2-dimensional nano-sheets exfoliated from a 3-dimensional layered material, the process comprising the steps of:

> exfoliating the 3-dimensional layered material in a solvent or a water-surfactant to provide dispersed 2-dimensional nano-sheets;
> supplying a polymer at a sufficient temperature to provide a polymer melt; and adding the dispersed 2-dimensional nano-sheets to the polymer melt while stirring, evaporating part or all of the solvent or water-surfactant solution, to produce a homogenous composite material.

The present invention described herein is a simple and cost effective process of significantly increasing the strength and/or thermal stability of a polymer or copolymer. The term "polymer" in the specification should be understood to mean a large molecule (macromolecule) composed of repeating structural units. These subunits are typically connected by covalent chemical bonds. Although the term *"polymer"* is sometimes taken to refer to plastics, it actually encompasses a large class comprising both natural and synthetic materials with a wide variety of properties. Such polymers may be thermoplastics, elastomers, or biopolymers.

The term "copolymer" should be understood to mean a polymer derived from two (or more) monomeric species, for example a combination of any two of the below-mentioned polymers. An example of a copolymer, but not limited to such, is PETG (Polyethylene Terephthalate Glycol), which is a PET modified by copolymerization. PETG is a clear amorphous thermoplastic that can be injection moulded or sheet extruded and has superior barrier performance used in the container industry.

An example of a polymer is polyester. Polyester is a relatively strong but cheap commodity fibre material. While stronger polymer exist (*e.g.* Kevlar), they tend to be much more expensive. By first exfoliating the 3-dimensional layered material in a solvent before mixing into the liquid product, a uniform composite with well dispersed exfoliated 2-dimensional nano-sheets is produced with minimal aggregates. The process is compatible with existing melt processing techniques. Thus, it opens the way to cheap melt-processed polyester based fibres with strength entering the realm of high performance fibres.

In addition, polyester is a material which is heavily recycled. Each time it is recycled, its strength degrades slightly due to the introduction of defects, reductions in molecular weight, chain shortening *etc.* Addition of graphene or other suitable exfoliated 2-dimensional layered materials during recycling could increase the strength of the recycled plastic to its original level, thereby mitigating much of the reduction in strength currently observed and significantly increasing the number of times a given plastic can be recycled during its lifetime.

In one embodiment of the present invention, the process may further comprise the step of heating the dispersed 2-dimensional nano-sheets in solvent or water-surfactant solution to substantially the boiling point temperature of the solvent or water-surfactant solution prior to the step of adding the dispersed 2-dimensional nano-sheets to the polymer melt.

In one embodiment of the present invention, the solvent or water-surfactant may be removed from the exfoliated 2-dimensional nano-sheets to form a solid exfoliated 2-dimensional nano-sheet prior to the step of adding the 2-dimensional nano-sheets to the polymer melt.

The technique described above of mixing an exfoliated 2-dimensional nano-sheet in solvent with molten polymer melt works extremely well and gives very well dispersed composites. This process is well-suited to masterbatch preparation than for general polymer processing. For general polymer processing, once the 2-dimensional nano-sheets have been exfoliated, the solvent can be removed by filtration or by addition of a non-solvent to produce a solid consisting of re-aggregated exfoliated 2-dimensional nano-sheets. The resultant solid tends to be very weakly bound and as such can be very easily re-dispersed. The solid exfoliated 2-dimensional nano-sheet could be added directly to melt mixers. The mixing process would re-disperse the 2-dimensional nano-sheet giving a good dispersion and so good mechanical properties. The advantage here would be that exfoliated 2-dimensional nano-sheet could be mixed into the polymer or adhesive in any mixer.

In one embodiment of the present invention, the polymer is a thermoplastic which may be selected from the group comprising, but not limited to, acrylonitrile butadiene styrene, polypropylene, polyethylene, polyvinylchloride, polyamide, polyester, acrylic, polyacrylic, polyacrylonitrile, polycarbonate, ethylene-vinyl acetate, ethylene vinyl alcohol, polytetrafluoroethylene, ethylene chlorotrifluoroethylene, ethylene tetrafluoroethylene, liquid crystal polymer, polybutadiene, polychlorotrifluoroehtylene, polystyrene, polyurethane, and polyvinyl acetate.

In one embodiment of the present invention, the polymer is an elastomer which may be selected from, but not limited to, the group comprising Polybutadiene, butadiene and acrylonitrile copolymers (NBR), natural and synthetic rubber, polyesteramide, chloropene rubbers, poly(styrene-b-butadiene) copolymers, polysiloxanes (such as Polydimethylsiloxane (PDMS)), polyisoprene, polyurethane, polychloroprene, chlorinated polyethylene, polyester/ether urethane, poly ethylene propylene, chlorosulphanated polyethylene, polyalkylene oxide and mixtures thereof.

In one embodiment of the present invention, the polymer is a biopolymer which may be selected from, but not limited to, the group comprising Gelatin, Lignin, Cellulose, Polyalkylene esters, Polyvinyl alcohol, Polyamide esters, Polyalkylene esters, Polyanhydrides, polylactide (PLA) and its copolymers and polyhydroxyalkanoate (PHA).

In one embodiment of the present invention, the polymer is a copolymer selected from, but not limited to, the group comprising copolymers of propylene and ethylene, Acetal copolymers (Polyoxymethylenes), Polymethylpentene Copolymer (PMP), Amorphous copolyester (PETG), acrylic and acrylate copolymers, polycarbonate (PC) copolymer, Styrene block copolymers (SBCs) to include Poly(styrene-butadiene-styrene) (SBS), Poly(styrene-isoprene-styrene) (SIS), Poly(styrene-ethylene/butylene-styrene) (SEBS), Ethylene vinyl acetate (EVA) and ethylene vinyl alcohol copolymer (EVOH) amongst others.

In one embodiment of the present invention, the material is biodegradable and/or compostable, a polymer or copolymer and can be a synthetic or a natural resin. These materials can be processed by traditional thermoplastic processing methods.

In a further embodiment of the present invention, there is provided a process for producing a composite material using 2-dimensional nano-sheets exfoliated from a 3-dimensional layered material, the process comprising the steps of:

exfoliating the 3-dimensional layered material in a solvent or a water-surfactant solution to provide dispersed 2-dimensional nano-sheets;
adding the dispersed 2-dimensional nano-sheets to solution or dispersion of an additional material while stirring to produce a homogenous material solution; and
evaporating part or all of the solvent or the water-surfactant solution to form the composite material.

In one embodiment of the present invention, the material is an adhesive which may be selected from polyvinyl acetate, ethylene-vinyl acetate, polyamide, polyester resin, polyethylene, polypropylene, polysulfide, polyurethane, polyvinyl alcohol, polyvinyl chloride, polyvinyl chloride emulsion, polyvinylpyrrolidone, silicone, styrene acrylic copolymer, dichloromethane, acrylonitrile, cyanoacrylate, and acrylic.

In one embodiment of the present invention, the water-surfactant solution may comprise a solution of water and a surfactant selected from the group comprising sodium cholate (NaC), sodium dodecylsulphate (SDS), sodium dodecylbenzenesulphonate (SDBS), lithium dodecyl sulphate (LDS), deoxycholate (DOC), taurodeoxycholate (TDOC), IGEPAL CO-890 (IGP), Triton-X 100 (TX-100).

The water-surfactant solution of the present invention may comprise a solution of sodium cholate (NaC) or any other type of surfactant known to those skilled in the art, for example, but not limited to, sodium dodecylsulphate (SDS), sodium dodecylbenzenesulphonate (SDBS), lithium dodecyl sulphate (LDS), deoxycholate (DOC), taurodeoxycholate (TDOC), IGEPAL CO-890 (IGP), Triton-X 100 (TX-100), and water. In this instance, the NaC in water may be used at a concentration of 1.5mg/ml (w/v). The advantage of a water-based exfoliation process is that it is safe in terms of personal safety, is simple and easy to perform, and is environmentally friendly. The water-based exfoliation process of the present invention may be performed in a matter of minutes. Furthermore, exfoliation using surfactants can be achieved in ambient conditions without the need for an inert atmosphere.

The use of solvent- or water-surfactant-exfoliated 2-dimensional nano sheets as a filler produces composite fibres with significantly increased stiffness, toughness and tensile strength. Using a filler such as graphite exfoliated from a graphene costs as little as approximately €0.36/g compared to current use of single-walled nanotubes which cost approximately €500/g.

In one embodiment of the present invention, the 3-dimensional layered material may be selected from the group comprising graphite, a transition metal dichalcogenide (TMD), transition metal oxides, boron nitride (BN), $Bi_2Te_3$, $Sb_2Te_3$, TiNCl, or any other inorganic layered compound.

In one embodiment of the present invention, the transition metal dichalcogenide (TMD), transition metal oxides and other inorganic layered compound may have the formula $MX_n$, where M is a transition metal and $1 \leq n \leq 3$.

In one embodiment of the present invention, M may be selected from the group comprising Ti, Zr, Hf, V, Nb, Ta, Cr, Mn, Mo, W, Tc, Re, Ni, Pd, Pt, Fe and Ru and X is selected from the group comprising O, S, Se, and Te.

In one embodiment of the present invention, the solvent may be N-methyl-2-pyrrolidone, Cyclopentanone (CPO), Cyclohexanone, N-formyl piperidine (NFP), Vinyl pyrrolidone (NVP), 1,3-Dimethyl-2-imidazolidinone (DMEU), Bromobenzene, Benzonitrile, Benzyl Benzoate, N,N'-Dimethylpropylene urea, (DMPU), γ-Butrylactone (GBL), Dimethylformamide (DMF), N-ethyl-pyrrolidone (NEP), Dimethylacetamide (DMA), Cyclohexylpyrrolidone (CHP), dimethylsulfoxide DMSO, Dibenzyl ether, Chloroform, Isopropylalcohol (IPA), Cholobenzene , 1-Octyl-2-pyrrolidone (N8P), 1-3 dioxolane, Ethyl acetate, Quinoline, Benzaldehyde, Ethanolamine, Diethyl phthalate, N-Dodecyl-2-pyrrolidone (N12P), Pyridine, Dimethyl phthalate, Formamide, Ethanol, Vinyl acetate, Acetone or any other solvent which effectively disperses layered compounds.

In one embodiment of the present invention, the composite product may comprise a mass of the exfoliated 2-dimensional layered material of between about 0.01 wt% to about 10 wt%, preferably between about 0.0.05 wt% to about 8 wt%, more preferably between about 0.0.075 wt% to about 4 wt%, ideally about 0.1 wt% to about 2 wt%, and particularly about 0.1 wt% to about 0.5 wt%.

In one embodiment of the present invention, there is provided a composite product produced by the process described above selected from the group comprising a polyester-graphene composite, a polyvinyl acetate-graphene composite, an acrylonitrile butadiene styrene-graphene composite, a polypropylene-graphene composite, a polyethylene-graphene composite, a polyvinylchloride-graphene composite, a polyamide-graphene composite, an acrylic-graphene composite, a polyacrylic-graphene composite, a polyacrylonitrile-graphene composite, a polycarbonate-graphene composite, an ethylene-vinyl acetate-graphene composite, an ethylene vinyl alcohol-graphene composite, a polytetrafluoroethylene-graphene composite, an ethylene chlorotrifluoroethylene-graphene composite, an ethylene tetrafluoroethylene-graphene composite, a polybutadiene-graphene composite, a polychlorotrifluoroehtylene-graphene composite, a polystyrene-graphene composite, a polyurethane-graphene composite, a polyvinyl acetate-graphene composite, polyester-boron nitride composite, a polyvinyl acetate-boron nitride composite, an acrylonitrile butadiene styrene-boron nitride composite, a polypropylene-boron nitride composite, a polyethylene-boron nitride composite, a polyvinylchloride-boron nitride composite, a polyamide-boron nitride composite, an acrylic-boron nitride composite, a polyacrylic-boron nitride composite, a polyacrylonitrile-boron nitride composite, a polycarbonate-boron nitride composite, an ethylene-vinyl acetate-boron nitride composite, an ethylene vinyl alcohol-boron nitride composite, a polytetrafluoroethylene-boron nitride composite, an ethylene chlorotrifluoroethylene-boron nitride composite, an ethylene tetrafluoroethylene-boron nitride composite, a polybutadiene-boron nitride composite, a polychlorotrifluoroehtylene-boron nitride composite, a polystyrene-boron nitride composite, a polyurethane-boron nitride composite and a polyvinyl acetate-boron nitride composite.

In the specification, the term "sufficient temperature" should be understood to mean that the temperature must be enough to, for example, melt the polymer *i.e.* above the melting temperature of the polymer.

**Brief Description of the Drawings**

The invention will be more clearly understood from the following description of an embodiment thereof, given by way of example only, with reference to the accompanying drawings, in which:-

Figure 1: SEM images of melt processed PET-SWNT fibres. The scale bars are A) 20 μm, B) 2 μm, C) 10 μm and D) 1 μm.

Figure 2: Mechanical properties of PET-SWNT fibres with diameter D≈5 μm as a function of nanotube volume fraction. A) Stress strain curves. B) Young's modulus. The slope of the straight line is $dY/dV_f$=1805±150 GPa. C) Ultimate tensile strength. The slope of the straight line is $d\sigma_B/dV_f$=51±12 GPa.

Figure 3: Mechanical properties of PET-SWNT fibres as a function of fibre diameter. For a given fibre the typical spread in the diameter is <10%. A) Young's modulus, B) ultimate tensile strength, C) strain at break and D) tensile toughness. In A) and B) the dashed lines are power law fits to the entire data set. The nanotube contents are given as wt%.

Figure 4: SEM images of melt processed PET-graphene fibres. The scale bars are A) 10 μm, B) 2 μm and C) 2 μm.

Figure 5: Mechanical properties of PET-graphene fibres with diameter D≈13 μm as a function of graphene volume fraction. A) Stress strain curves. B) Young's modulus. The slope of the straight line is $dY/dV_f$=2100±1300 GPa. C) Ultimate tensile strength. The slope of the straight line is $d\sigma_B/dV_f$=145±15 GPa.

Figure 6: Mechanical properties of PET-graphene fibres as a function of fibre diameter. For a given fibre the typical spread in the diameter is 7%. A) Young's modulus, B) ultimate tensile strength, C) strain at break and D) tensile toughness. The graphene contents are given as wt%. The line in B is a power law fit to the entire data set.

Figure 7: Summary of strength and stiffness data for all the fibres measured in this work. For comparison, the best data from three papers in the literature are also included.

Figure 8: Stress strain curves for polypropylene and graphene/polypropylene thin films.

Figure 9: Graphene-polyvinyl acetate composites as glue. A) Images of pieces of wood stuck together for (top) tensile and (bottom) shear measurements. B) Stress strain curves for tensile adhesive measurements.

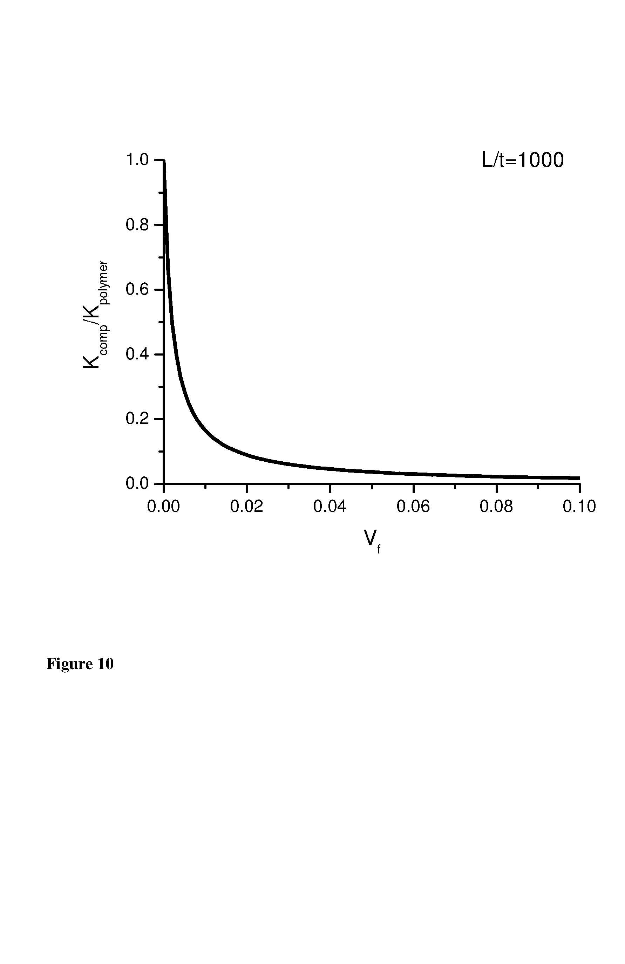

Figure 10: relative permeability of composite versus platelet volume fraction for platelets with aspect ratio of 1000 as calculated using eq 3.

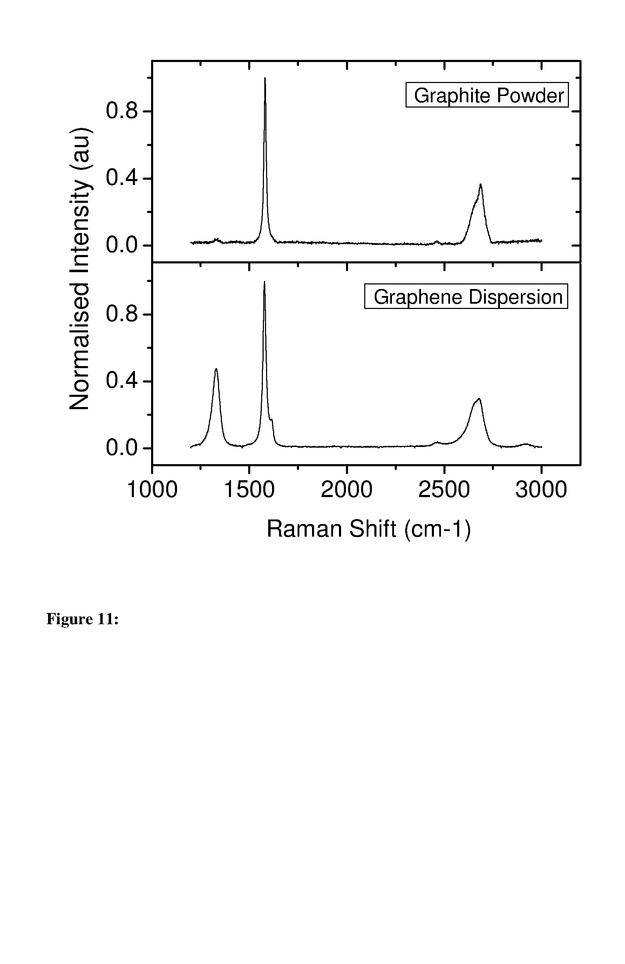

Figure 11: Raman spectra for the graphene dispersion used. A reference graphite powder is shown also as a comparison. Here the D band ($\sim$1300cm$^{-1}$) is indicative of the presence of defects.

Figure 12: Strain at break and tensile toughness as a function of graphene volume fraction for fibres with a range of mean diameters from 7 to 13 $\mu$m.

## Detailed Description of the Drawings

### Experimental Procedure

Composite melts can be produced by adding solvent-dispersed, exfoliated single walled nanotubes (SWNTs) or graphene to a polymer melt, for example a polyethylene terephthalate (PET) melt, while stirring. After solvent evaporation, a uniform melt can be obtained with no visual evidence of aggregates. The procedure is described in detail below. This combination of melt and solution processing can give very well-dispersed filler particles (nanotubes, graphene *etc*). Relatively little mixing is required. This processing technology can be compatible with most melt mixing machinery but may be best suited to master-batch production.

### Nano-filler exfoliation

Graphite powder (Aldrich product number 332461, batch number 06106DE) can be dispersed in N-methyl-2-pyrrolidone (NMP, Aldrich) at an initial concentration of 3mg/ml (1800mgs in 600mls) by bath sonication (Branson 1510E-MT) for 144 hours using methods described recently (Hernandez, Y.; Nicolosi, V.; Lotya, M.; Blighe, F. M.; Sun, Z.; De, S.; McGovern, I. T.; Holland, B.; Byrne, M.; Gun'Ko, Y. K.; Boland, J. J.; Niraj, P.; Duesberg, G.; Krishnamurthy, S.; Goodhue, R.; Hutchison, J.; Scardaci, V.; Ferrari, A. C.; Coleman, J. N., High-Yield Production of Graphene by Liquid-Phase Exfoliation of Graphite. Nat Nano 2008, 3, 563-568; Khan, U.; O'Neill, A.; Lotya, M.; De, S.; Coleman, J. N., High-Concentration Solvent Exfoliation of Graphene. Small 2010, 6, 864-871). In order to produce a more concentrated dispersion, this dispersion can then be filtered on a porous nylon membrane (Sterlitech, pore diameter 0.45 $\mu$m). The deposited graphene can then be re-dispersed in 15 mls of fresh NMP by bath sonication for a further 24 hrs. This dispersion can then be centrifuged at 1000 rpm for 45 mins and the supernatant collected.

SWNTs (HiPCO, Unidym) can be dispersed in NMP at an initial concentration of 5mg/ml using a sonic tip processor (GEX600, 120 W, 60 kHz, flat head probe) operated in pulsed mode (9 sec on/9 sec off) for 16 hrs. The resulting dispersion can be further sonicated in a sonic bath for 4 hours. The dispersion was not centrifuged at any time.

The dispersed concentration can be estimated by filtering 2ml of dispersion through a nylon membrane which can then be dried in an oven (60 °C) for an hour. The filtrate mass can be found by careful weighing, yielding concentrations of, for example, 5mg/ml and 9mg/ml for nanotube and graphene dispersions, respectively.

### Composite formation

The thermoplastic of choice (a sheet of PET cut into pieces as well as polypropylene (PP) have been tested) can be placed in a beaker on a hotplate ($\sim$190 °C) and allowed to melt over the course of approximately 10 mins. Composite melts can be produced by adding either a liquid dispersion or a solid form of nanotubes/graphene with well-defined volume and concentration (and so well defined dispersed mass) to the polymer melt. The mixture can be constantly stirred to give a homogenous liquid. After approximately 10 mins of heating, the NMP had completely evaporated to give a composite melt. The mass fraction of the composite is controlled by the mass of nanotubes/graphene added and the polymer mass. For the PET based composites, nanotube and graphene filled composite melts can be prepared at mass fractions (0.5wt%, 1wt%, 2wt%) and (0.1wt%, 0.25wt%, 0.5wt% 1 wt%, 4wt%), respectively. For the PP based composites, melts can be prepared at mass fractions of 1wt%, 2wt%.

*Fibre formation*

Fibres can be formed from either a PET or composite melt by inserting a fine needle to which the melt adhered strongly. The needle can be drawn out of the melt at a rate of ≈40 cm/s to give a fibre. The fibres can be left to dry in ambient conditions for a minimum of 1hr before drawing to the maximum possible draw ratio before failure. Interestingly, while the PET fibres can be drawn to ~200%, the composite fibres can generally be drawn considerably further: SWNT fibres - (0.5wt%, 400% draw), (1wt%, 250%), (2wt%, 400%) and Graphene fibres - (0.25wt%, 370%), (0.5wt%, 350%) (1wt%, 400%), (4wt%, undrawable). This is in contrast to the experience of Anand *et al.* and Mun *et al.* (Mun, S. J.; Jung, Y. M.; Kim, J.-C.; Chang, J.-H., Poly(Ethylene Terephthalate) Nanocomposite Fibers with Functionalized Multiwalled Carbon Nanotubes Via in-Situ Polymerization. Journal of Applied Polymer Science 2008, 109, 638-646) who found that the maximum draw ratio either remained constant or was reduced in the presence of nanotubes. In addition, the 1 wt% nanotube fibres and 0.5 wt% graphene fibres can be drawn to a range of draw ratios (and so a range of final diameters). The fibres can be drawn while cool and released immediately afterward. In all cases, they can retain all of the drawn length.

Using this procedure, between 4 and 23 fibres were produced for each volume fraction of both nanotubes and graphene. After drawing, the fibre diameters can be measured at typically 3 positions along their lengths using a profilometer (Dektak 6M Stylus Profiler). The diameter variance along a fibre can be typically small (<10%). The mean diameter can vary from 3-19 $\mu$m for the nanotube composites and 5-20 $\mu$m for the graphene composites.

*Film formation*

Polypropylene films can be prepared by pouring the melt into a Teflon tray and allowed to cool. The resulting films can be made at a range of thickness.

*Characterisation*

Tensile testing can be performed on all fibres with a Zwick Z100 tensile at a strain rate of 5 or 15 mm/min. SEM measurements can be performed using a Carl Zeiss Ultra Plus Field Emission Scanning Electron Microscope. The nanotube/graphene mass fraction can be converted to volume fraction assuming the densities: $\rho_{PET}$=1300kg/m$^3$ $\rho_{SWNT}$=1800kg/m$^3$ & $\rho_{Graphene}$=2100kg/m$^3$.

*PVAc-graphene glue formation*

Graphite powder (Aldrich product number 332461, batch number 06106DE) can be dispersed in N-methyl-2-pyrrolidone (NMP, Aldrich) at an initial concentration of 100mg/ml by tip sonication for 6 hours. The dispersion can then be centrifuged at 1000 rpm, the supernatant removed and fresh NMP added. This can be tip sonicated for 15 minutes and then centrifuged at 500 rpm for 45 minutes. The sediment can be removed and the supernatant retained. In order to produce a more concentrated dispersion, the supernatant can then be filtered on a porous nylon membrane (Sterlitech, pore diameter 0.45 $\mu$m). The deposited graphene can then be re-dispersed in fresh tetrahydrofuran (THF) by bath sonication. PVAc can then be added to this such that the PVAc concentration can be 200 mg/ml and the graphene content can be 1.5wt%.

These concentrated solutions can be used as glue. To test the glue, a fixed mass of glue can be added to fixed area of wood. The pieces can be joined and a fixed mass added on top. This can be done for both shear and tensile measurements. In each case, at least 3 identical samples can be measured.

<u>Results and Discussion</u>

*PET-nanotube fibres: Volume fraction dependence*

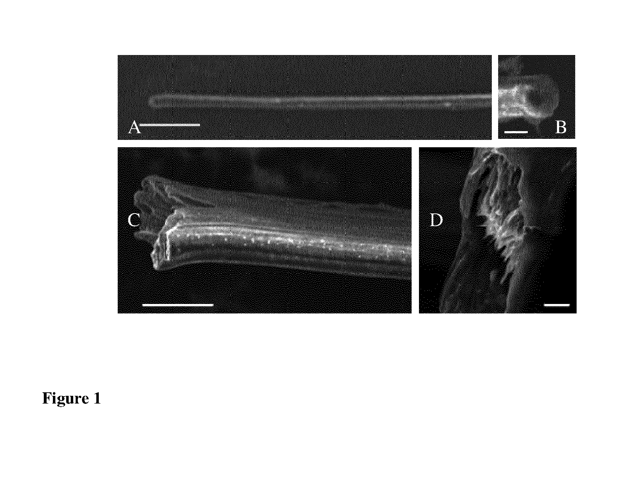

The processing procedure described herein resulted in a large set of PET-nanotube fibres with a range of volume fractions and diameters. SEM images of a selection of these fibres are shown in Figure 1. As shown in Figure 1A the fibre diameter is extremely uniform and the cross-section relatively circular (Figure 1B). In addition, the side-walls are relatively smooth and well defined (Figure 1C). No signs of nanotube aggregates were observed in any fibres. Figure 1D illustrates a fracture surface of a broken fibre. Close to the centre of the fibre, a number of SWNT bundles can be seen protruding. This suggests that the fracture mechanism is by nanotube pullout. This implies that the nanotubes used here are shorter than the critical length and ultimately means that the fibre strength will not be limited by the nanotube strength.

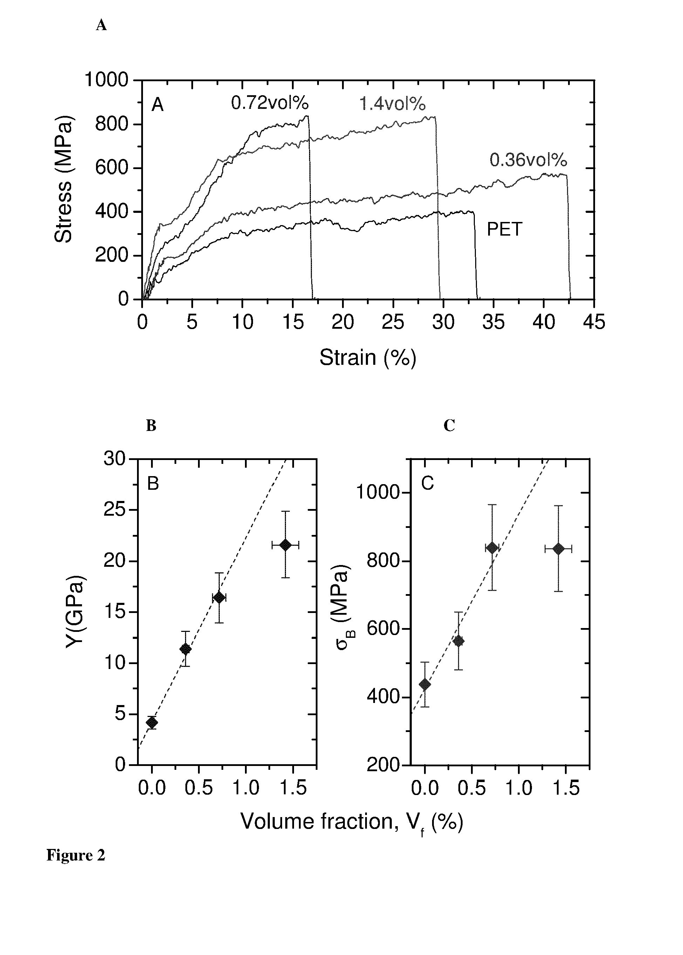

Stress-strain measurements were made for all fibres. For composites, the most fundamental question is how the mechanical properties scale with filler content. The measured fibres were divided into subsets including all volume fractions and with similar diameters (maximum deviation from mean diameter was ~10%). Note that less than half of the total fibres could be grouped into such subsets. This allowed the study of the effect of nanotube volume fraction on mechanical properties without any contribution from varying fibre diameter. This is critical as the mechanical properties of fibres can vary strongly with fibre diameter. Figure 2A illustrates stress-strain curves for a PET fibre and composite fibres with 0.36 vol%, 0.72 vol% and 1.4 vol% SWNT. In all cases the fibres were very close to 5 $\mu$m in diameter. On addition of the nanotubes, the modulus and strength increase significantly. The increases in modulus, Y, and strength, $\sigma_B$, can be qualified by plotting them as a function of volume fraction, $V_f$, as shown in Figures 2B and 2C. The modulus increases from 4 GPa for PET to 22 GPa for the 1.5 vol% sample. The initial portion of this curve is linear with slope $dY/dV_f$=1805$\pm$150 GPa. This is significantly beyond the upper limit of 1000 GPa set by the intrinsic nanotube modulus and the rule of mixtures, indicating that an additional component of reinforcement is present. This is not unusual, with nanotube-nucleated crystallinity a common cause. In fact, this is a reasonable explanation as nanotube-induced crystallinity has been observed in PET-nanotube composites.

Similarly, the strength increases from 420 MPa for PET only to 820 MPa for the 1.5 SWNT vol% sample. Again, the initial portion of this curve is linear with slope $d\sigma_B/dV_f$=51$\pm$12 GPa. While this value is not beyond the upper limit of ~50-100 GPa set by the intrinsic nanotube strength and the rule of mixtures, it is extremely high for a nanotube reinforced composite. Because nanotubes are often shorter than the critical length (as is the case here), composite strength is usually much lower than if it was limited by the nanotube strength. Usually, the strength increase is limited by either defects or the shear strength of the polymer-nanotube interface (or the polymer shear strength depending on which is smaller). The large value of $d\sigma_B/dV_f$ suggests that defects do not dramatically affect the strength or that the interfacial/polymer shear strengths are relatively large. Alternatively, nanotube nucleated crystallinity may contribute strongly to the reinforcement.

The strain at break, $\varepsilon_B$, was also measured to be relatively invariant with nanotube volume fraction, remaining between 20 and 40% for almost all volume fractions for each diameter set. The same behaviour was observed for the tensile toughness, T, (energy per unit volume required to break the fibre) which was typically between 75 and 175 MJ/m$^3$ for most samples.

*PET-nanotube fibres: Diameter dependence*

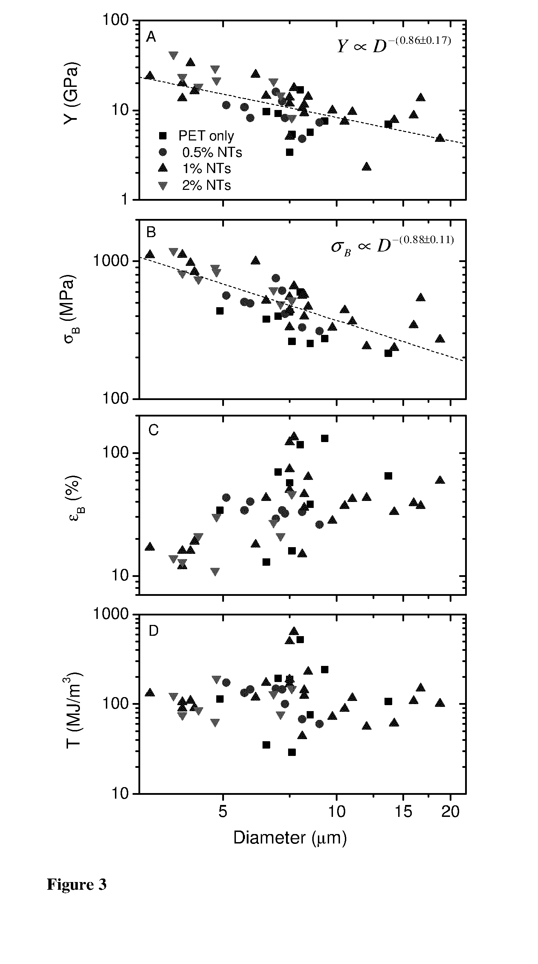

The entire data set can be summarised by plotting each mechanical parameter (Y, $\sigma_B$, $\varepsilon_B$ and T) as a function of fibre diameter as shown in Figure 3. Both modulus and strength increase with decreasing fibre diameter.

The highest modulus and strength observed were 42 GPa and 1.2 GPa, both for a 3.7 $\mu$m diameter fibre. Recently, it was shown that both modulus and strength of polymer-nanotube composite fibres scale with fibre diameter as power laws; $Y \propto D^{-\alpha}$ and $\sigma_B \propto D^{-(\alpha+\beta)}$. The diameter dependence of the modulus is controlled only by changes in nanotube orientation with fibre diameter (as described by $\alpha$). However, the diameter dependence of the strength is controlled by a combination of orientation effects and surface defects (as described by $\beta$). For polyvinyl alcohol fibres, $\alpha \approx 0.6$ while $\beta \approx 0.3$.

This behaviour was tested by fitting the entire modulus and strength versus diameter data sets to power laws. It was found in both cases with reasonable agreement, that is, $\alpha$=0.86$\pm$0.17 and $\alpha+\beta$=0.88$\pm$0.11, consistent with $\beta \leq 0.3$. It can be concluded from this that the observed diameter dependence is entirely consistent with this defect/orientation model. However, it is likely that the orientation dependence here is slightly stronger and the defect dependence slightly weaker than that observed previously.

The strain at break as a function of fibre diameter is shown in Figure 3C. In general, the strain at break tends to increase with increasing D, from ~10% to ~70% as D is increased from 4 to 18 $\mu$m. Interestingly, there appears to be a peak in the strain at break for D$\approx$8 $\mu$m where $\varepsilon_B$ reaches 130%. Figure 3D shows the tensile toughness as a function of D. This remains relatively flat at ~100 MJ/m$^3$ but shows signs of a peak again around D$\approx$8 $\mu$m. The highest value obtained was 637 MJ/m$^3$ for composites containing 1 wt% nanotubes. This is relatively large compared to tough materials such as Kevlar and dragline spider silk (50 MJ/m$^3$ and 150 MJ/m$^3$). However, it is worth noting here that the toughness is attained at relatively large ductility i.e. >100%.

*PET-graphene fibres*

Polymer-nanotube composite fibres are relatively straightforward to prepare and have been known for over 10 years. In contrast, polymer-graphene fibres have not been reported to date. Like nanotubes, graphene is a suitable filler due to the exception mechanical properties of monolayer graphene which has been reported at Y$\approx$1 TPa and $\sigma_B \approx$130 GPa. While a number of publications have reported bulk composites based on chemically modified graphene as a filler, in general the level of reinforcement achieved has been significantly below that predicted by the rule of mixtures. This is probably due to a combination of the relatively poor mechanical properties of chemically modified graphene and the fact that reasonably large graphene flakes are required to achieve effective reinforcement. However, it has recently been shown that high quality, defect free graphene with relatively large flake size can be produced by exfoliation of graphite in solvents or surfactants.

In the present invention, a solvent based dispersion and exfoliation method for graphene can be used (Hernandez, Y.; Nicolosi, V.; Lotya, M.; Blighe, F. M.; Sun, Z.; De, S.; McGovern, I. T.; Holland, B.; Byrne, M.; Gun'Ko, Y. K.; Boland, J. J.; Niraj, P.; Duesberg, G.; Krishnamurthy, S.; Goodhue, R.; Hutchison, J.; Scardaci, V.; Ferrari, A. C.; Coleman, J. N., High-Yield Production of Graphene by Liquid-Phase Exfoliation of Graphite. Nat Nano 2008, 3, 563-568; Khan, U.; O'Neill, A.; Lotya, M.; De, S.; Coleman, J. N., High-Concentration Solvent Exfoliation of Graphene. Small 2010, 6, 864-871;Khan, U.; Porwal, H.; O'Neill, A.; Nawaz, K.; May, P.; Coleman, J. N., Solvent-Exfoliated Graphene at Extremely High Concentration. Langmuir 2011, 27, 9077-9082). This method results in dispersions of few layer graphene flakes with mean length, width and thickness (in this case) of 1.1 $\mu$m, 0.51 $\mu$m and 4.6 layers respectively.

This exfoliation method can be combined with the polymer-nanotube fibre formation method described above to prepare high quality polymer-graphene fibres.

*PET-graphene fibres: Volume fraction dependence*

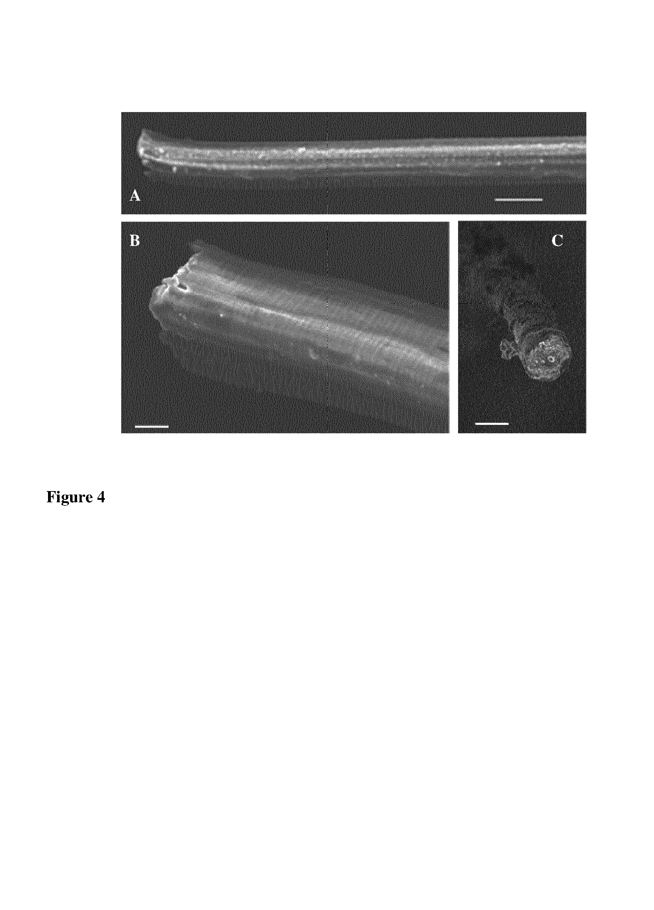

Shown in Figure 4 are SEM images of PET-graphene fibres. Like the PET-nanotube fibres, they are uniform in diameter, have smooth, well defined walls and a circular cross-section.

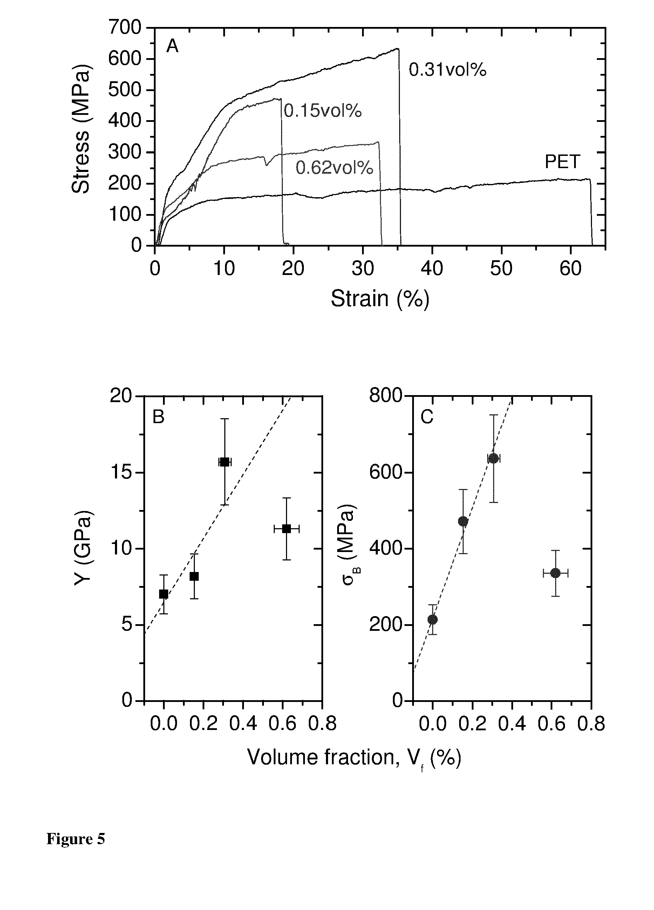

Shown in Figure 5A are stress strain curves for a subset of PET-graphene fibres with D≈13 $\mu$m. Here both modulus and strength increase with graphene content while the strain at break tends to fall off. The modulus increases approximately linearly with graphene volume fraction from ~7 GPa to ~16 GPa for the 0.3 vol% sample. The rate of increase is $dY/dV_f$=2100±1300 GPa. Similarly the strength increases linearly with graphene volume fraction from ~200 MPa to ~640 MPa for the 0.3 vol% sample with a rate of increase of $dY/dV_f$=145±15 GPa. Again, these rates are at the upper limit of what might be expected from the intrinsic properties of graphene and the rule of mixtures. At higher volume fractions, it should be noted that both modulus and strength fall off dramatically, suggesting large scale graphene aggregation.

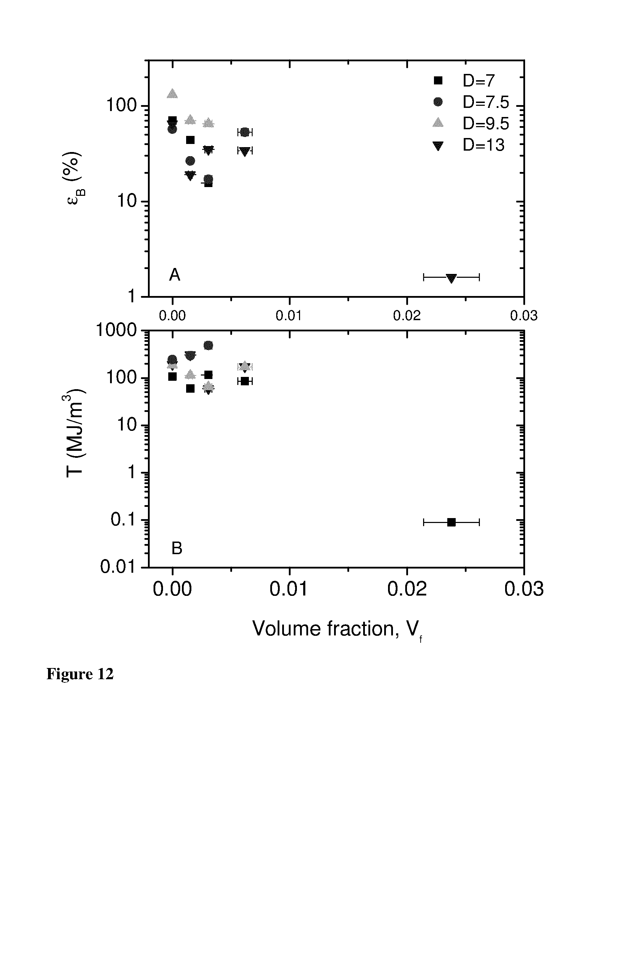

The strain at break and toughness of the fibres prepared above were also measured as a function of graphene mass fraction (Figure 12). Here, significant differences were observed compared to the PET-nanotube fibres. Both ductility and toughness fell dramatically with graphene content. The strain at break fell exponentially with volume fraction from ~100 % to 1-2% on addition of 4wt% graphene. A similar reduction was observed for toughness.

*PET graphene fibres: Diameter dependence*

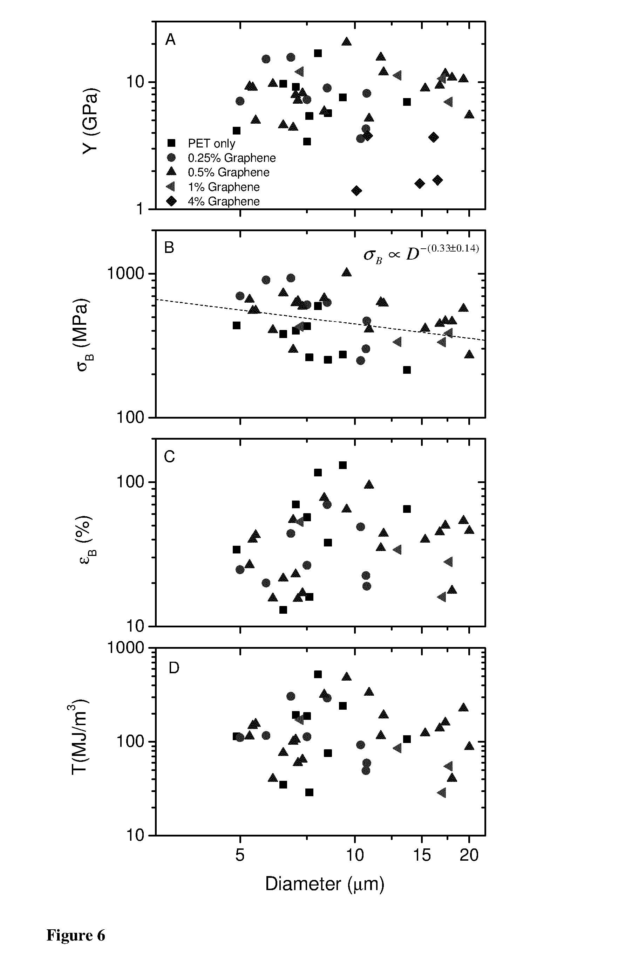

As with the PET-nanotube composites, the mechanical parameters were plotted as a function of D, as shown in Figure 6. The modulus data (Figure 6A) is extremely scattered, hardly displaying any diameter dependence at all (*i.e.* $Y \propto D^{-\alpha}$ with α=0.1±0.2, fit line not shown). This is perhaps not surprising for a planar filler like graphene, as confinement due to small fibre diameter may not result in orientation as efficiently as it will for rod-like fillers. As a result the largest modulus observed was 21 GPa for a relatively large fibre with D=9.5 $\mu$m.

However, the strength data in Figure 6B does display a diameter dependence, consistent with $\sigma_B \propto D^{-(\alpha+\beta)}$ where α+β=0.33±0.14. Ultimately, this means that β=0.2±0.3, a value entirely consistent with defect limited strength. As with modulus, the strongest fibre had D= 9.5 5 $\mu$m and had $\sigma_B$=1.0 GPa.

The strain at break data is plotted as a function of D in Figure 6C. Here two things are of note: (i) it is very clear that addition of graphene results in a reduction of ductility and (ii) the peak in ductility observed previously, is much clearer here. The toughness, as shown in Figure 6D, shows similar behaviour.

*Comparison of mechanical properties with previous work on PET-nanotube composites*

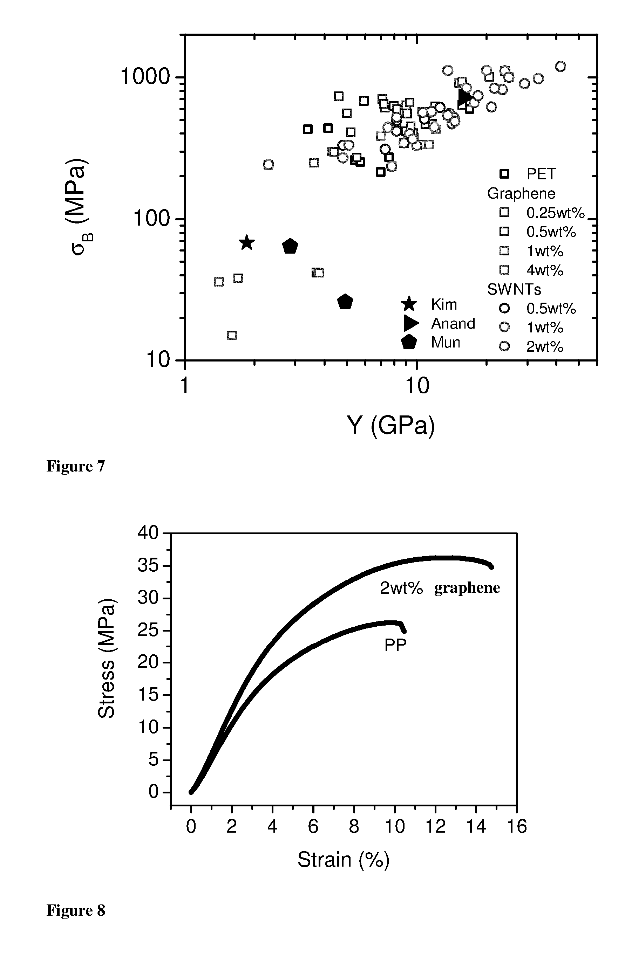

As mentioned above, there are only a handful of publications describing composites of PET and nanotubes. For these publications, the best results in terms of strength were plotted as a function of modulus in Figure 7. In addition, the same data for all of the fibres described herein were also plotted. Of the literature data, by far the highest strength and modulus values were those of Anand *et al.* who attained values of Y=16 GPa coupled with $\sigma_B$=720 MPa. By comparison, the PET-nanotube (2wt%) and PET-graphene (0.5wt%) composites described above show maximum moduli of 42 GPa and 21 GPa, respectively, and maximum strengths of 1.2 GPa and 1.0 GPa, respectively. The data described herein is superior largely because of the extremely good dispersion of the filler in the matrix (except for high graphene contents). This is almost certainly due to the fact that the fillers are dispersed in NMP prior to mixing, guaranteeing minimal aggregation. In addition, it is worth noting that the best values of modulus and strength of the fibres described herein are competitive with the best polyester fibres reported to date (Y=26 GPa, $\sigma_B$=1.3 GPa for D≈20 $\mu$m).

*Graphene polypropylene films*

Typical stress strain curves for a melt processed polypropylene film and a graphene-polypropylene composites with 2wt% graphene are shown in Figure 8. It is clear that addition of the graphene has noticeably increased the mechanical properties. For example, the Youngs modulus has increased from 600 MPa to 700 MPa while the tensile strength has increased from 29 to 40 MPa, an increase of 30%. It is worth noting that this processing method is applicable to all thermoplastics, for example, such as those commonly used in structural applications e.g. acrylonitrile butadiene styrene, polypropylene, polyethylene, polystyrene, polyvinylchloride, nylon, polyester, polyacrylic and polycarbonate.

*Polymer-graphene composite glue*

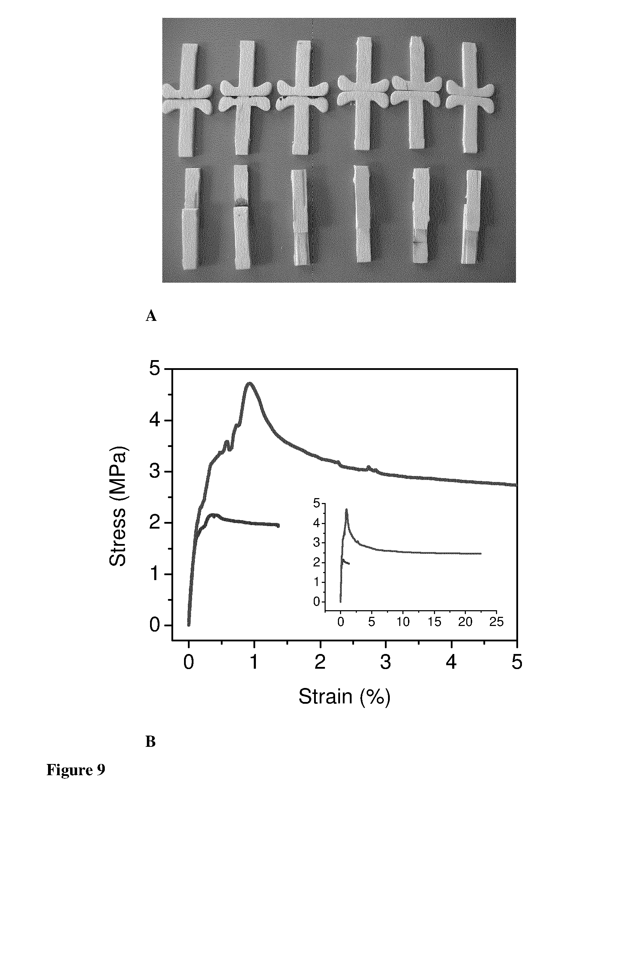

Composites by solution processing can also be prepared. Of particular interest are composites of polyvinyl acetate (PVAc) filled with 1.5 wt% graphene. This is particularly interesting as PVAc is a very common wood glue. Tests showed that the strength of PVAc can be doubled by adding <1% graphene. Increasing the strength of PVAc can increase its adhesive properties, as shown in Figure 9. Pieces of wood shaped either like a letter T or as a bar are glued together. The letters T were glued together to test the tensile adhesive strength of the glue while the bars were stuck together to test the shear strength of the glue (Figure 9A). The mechanical properties of the glued pieces were measured with a Zwick Z100 tensile tester at a strain rate of 0.1 mm/min. Representative stress strain curves for the tensile measurement are shown in Figure 9B. It can be seen that the PVAc glue breaks under a load of ~0.2 MPa at a strain of ~1.5%. However the composite glue (1.5wt%) breaks at 0.45 MPa at a strain of ~25%. This means not only did the tensile adhesive strength increase significantly but so did the energy to fracture (from 33 MJ/m$^3$ to 320 MJ/m$^3$). Similar results were found for the shear measurements with the shear adhesive strength increasing from 0.28 to 0.55 MPa.

The present invention provides a method to produce PET-nanotube and PET-graphene fibres by combining solution and melt processing. These fibres have exceptional mechanical properties, similar to the best polyester fibres ever reported. For low loadings of both filler types, the modulus and strength increased linearly with volume fraction, with slopes far in excess of rule of mixtures predictions, suggesting the presence of filler-induced crystallinity. For nanotube based composites, the diameter dependence of the composites suggest the modulus to be limited by nanotube orientation while the strength is limited by orientation and defects. However, for PET-graphene composites, the modulus was relatively invariant with D suggesting orientation to be relatively unaffected by diameter reduction. While the strength did depend on fibre diameter, the dependence was much weaker than for the nanotube fibres. This is consistent with orientation playing virtually no role and the strength being controlled largely by defects. While the ability to successfully reinforce commodity plastics with graphene is significant for purely economic reasons, reinforcement using graphene may be economically viable in a way that nanotubes never could be. For example the cost of graphite is <€5/kg. This means the material cost of adding 0.5wt% (*i.e.* where the maximum mechanical reinforcement is observed) graphene to a PET fibre is <0.03 cent per km for a fibre with D=100 $\mu$m (c.f. PET fibre costs ~1-3 cent per 1000 km). As the cost of high quality SWNT is ~€500/g, the cost per km of adding 2wt% SWNT is approximately €100.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described but may be varied in both construction and detail.

**Claims**

1. A process for producing a composite material using 2-dimensional nano-sheets exfoliated from a 3-dimensional layered material, the process comprising the steps of:

   exfoliating the 3-dimensional layered material in a solvent or a water-surfactant solution to provide dispersed 2-dimensional nano-sheets;
   supplying a polymer at a sufficient temperature to provide a polymer melt; and
   adding the dispersed 2-dimensional nano-sheets to the polymer melt while stirring, evaporating part or all of the solvent or water-surfactant solution, to produce a homogenous composite material.

2. A process according to Claim 1, further comprising the step of heating the dispersed 2-dimensional nano-sheets in solvent or water-surfactant solution to substantially the boiling point temperature of the solvent or water-surfactant solution prior to the step of adding the dispersed 2-dimensional nano-sheets to the polymer melt.

3. A process according to Claim 1 or Claim 2, wherein solvent or water-surfactant is removed from the exfoliated 2-dimensional nano-sheets to form a solid of re-aggregated exfoliated 2-dimensional nano-sheet prior to the step of adding the 2-dimensional nano-sheets to the polymer melt.

4. A process according to any one of Claims 1 to 3, wherein the polymer is a thermoplastic selected from the group comprising acrylonitrile butadiene styrene, polypropylene, polyethylene, polyvinylchloride, polyamide, polyester, acrylic, polyacrylic, polyacrylonitrile, polycarbonate, ethylene-vinyl acetate, ethylene vinyl alcohol, polytetrafluoroethylene, ethylene chlorotrifluoroethylene, ethylene tetrafluoroethylene, liquid crystal polymer, polybutadiene, polychlorotrifluoroehtylene, polystyrene, polyurethane, and polyvinyl acetate.

5. A process according to any one of Claims 1 to 3, wherein the polymer is an elastomer selected from the group comprising Polybutadiene, butadiene and acrylonitrile copolymers (NBR), natural and synthetic rubber, polyesteramide, chloropene rubbers, poly(styrene-b-butadiene) copolymers, polysiloxanes (such as Polydimethylsiloxane (PDMS)), polyisoprene, polyurethane, polychloroprene, chlorinated polyethylene, polyester/ether urethane, poly ethylene propylene, chlorosulphanated polyethylene, polyalkylene oxide and mixtures thereof.

6. A process according to any one of Claims 1 to 3, wherein the polymer is a copolymer including copolymers of propylene and ethylene, Acetal copolymers (Polyoxymethylenes), Polymethylpentene Copolymer (PMP), Amorphous copolyester (PETG), acrylic and acrylate copolymers, polycarbonate (PC) copolymer, Styrene block copolymers (SBCs) to include Poly(styrene-butadienestyrene) (SBS), Poly(styrene-isoprene-styrene) (SIS), Poly(styreneethylene/butylene-styrene) (SEBS), Ethylene vinyl acetate (EVA) and ethylene vinyl alcohol copolymer (EVOH) amongst others.

7. A process for producing a composite material using 2-dimensional nano-sheets exfoliated from a 3-dimensional layered material, the process comprising the steps of:

   exfoliating the 3-dimensional layered material in a solvent or a water-surfactant solution to provide dispersed 2-dimensional nano-sheets;
   adding the dispersed 2-dimensional nano-sheets to a solution or dispersion of an additional material while stirring to produce a homogenous mixed solution or dispersion; and
   evaporating part or all of the solvent or the water-surfactant solution to form the composite material.

8. A process according to Claim 7 wherein the material is an adhesive selected from polyvinyl acetate, ethylene-vinyl acetate, polyamide, polyester resin, polyethylene, polypropylene, polysulfide, polyurethane, polyvinyl alcohol, polyvinyl chloride, polyvinyl chloride emulsion, polyvinylpyrrolidone, silicone, styrene acrylic copolymer, dichloromethane, acrylonitrile, cyanoacrylate, and acrylic.

9. A process according to any preceding claim wherein the water-surfactant solution comprises a solution of water and a surfactant selected from the group comprising sodium cholate (NaC), sodium dodecylsulphate (SDS), sodium dodecylbenzenesulphonate (SDBS), lithium dodecyl sulphate (LDS), deoxycholate (DOC), taurodeoxycholate (TDOC), IGEPAL CO-890 (IGP), Triton-X 100 (TX-100).

10. A process according to any preceding claim, wherein the 3-dimensional layered material is selected from the group comprising graphite, a transition metal dichalcogenide (TMD), transition metal oxides, boron nitride (BN), $Bi_2Te_3$, $Sb_2Te_3$, TiNCl, or any other inorganic layered compound.

11. A process according to Claim 10 wherein the transition metal dichalcogenide (TMD), transition metal oxides and other inorganic layered compound have the formula $MX_n$, where M is a transition metal and $1 \leq n \leq 3$.

12. A process according to Claim 11 wherein M is selected from the group comprising Ti, Zr, Hf, V, Nb, Ta, Cr, Mn, Mo, W, Tc, Re, Ni, Pd, Pt, Fe and Ru and X is selected from the group comprising O, S, Se, and Te.

13. A process according to any preceding claim wherein the solvent is N-methyl-2-pyrrolidone, Cyclopentanone (CPO), Cyclohexanone, N-formyl piperidine (NFP), Vinyl pyrrolidone (NVP), 1,3-Dimethyl-2-imidazolidinone (DMEU), Bromobenzene, Benzonitrile, Benzyl Benzoate, N,N'-Dimethylpropylene urea, (DMPU), γ-Butrylactone (GBL), Dimethylformamide (DMF), N-ethyl-pyrrolidone (NEP), Dimethylacetamide (DMA), Cyclohexylpyrrolidone (CHP), dimethylsulfoxide DMSO, Dibenzyl ether, Chloroform, Isopropylalcohol (IPA), Cholobenzene, 1-Octyl-2-pyrrolidone (N8P), 1-3 dioxolane, Ethyl acetate, Quinoline, Benzaldehyde, Ethanolamine, Diethyl phthalate, N-Dodecyl-2-pyrrolidone (N12P), Pyridine, Dimethyl phthalate, Formamide, Ethanol, Vinyl acetate, Acetone or any other solvent which effectively disperses layered compounds.

14. A process according to any preceding claim wherein composite product comprises a mass of the exfoliated 2-dimensional nano-sheet of between 0.01 wt% to 10 wt%.

15. A composite product produced by the process of any preceding claim selected from the group comprising a polyester-graphene composite, a polyvinyl acetate-graphene composite, an acrylonitrile butadiene styrene-graphene composite, a polypropylene-graphene composite, a polyethylene-graphene composite, a polyvinylchloride-graphene composite, a polyamide-graphene composite, an acrylic-graphene composite, a polyacrylic-graphene composite, a polyacrylonitrile-graphene composite, a polycarbonate-graphene composite, an ethylene-vinyl acetate-graphene composite, an ethylene vinyl alcohol-graphene composite, a polytetrafluoroethylene-graphene composite, an ethylene chlorotrifluoroethylene-graphene composite, an ethylene tetrafluoroethylene-graphene composite, a polybutadiene-graphene composite, a polychlorotrifluoroehtylene-graphene composite, a polystyrene-graphene composite, a polyurethane-graphene composite, a polyvinyl acetate-graphene composite, polyester-boron nitride composite, a polyvinyl acetate-boron nitride composite, an acrylonitrile butadiene styrene-boron nitride composite, a polypropylene-boron nitride composite, a polyethylene-boron nitride composite, a polyvinylchloride-boron nitride composite, a polyamide-boron nitride composite, an acrylic-boron nitride composite, a polyacrylic-boron nitride composite, a polyacrylonitrile-boron nitride composite, a polycarbonate-boron nitride composite, an ethylene-vinyl acetate-boron nitride composite, an ethylene vinyl alcohol-boron nitride composite, a polytetrafluoroethylene-boron nitride composite, an ethylene chlorotrifluoroethylene-boron nitride composite, an ethylene tetrafluoroethylene-boron nitride composite, a polybutadiene-boron nitride composite, a polychlorotrifluoroehtylene-boron nitride composite, a polystyrene-boron nitride composite, a polyurethane-boron nitride composite and a polyvinyl acetate-boron nitride composite.

**Figure 1**

**A**

**B**                              **C**

Figure 2

**Figure 3**

**Figure 4**

Figure 5

A

Y (GPa)

■ PET only
● 0.25% Graphene
▲ 0.5% Graphene
◀ 1% Graphene
◆ 4% Graphene

B

$\sigma_B \propto D^{-(0.33\pm0.14)}$

$\sigma_B$ (MPa)

C

$\varepsilon_B$ (%)

D

T (MJ/m$^3$)

Diameter (μm)

Figure 6

**Figure 7**

**Figure 8**

A

B

Figure 9

**Figure 10**

Figure 11:

**Figure 12**

Europäisches
Patentamt

European
Patent Office

Office européen
des brevets

# EUROPEAN SEARCH REPORT

Application Number

EP 11 19 0729

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 822 163 A2 (AMCOL INTERNATIONAL CORP [US]) 4 February 1998 (1998-02-04) | 7 | INV. C08J5/00 |
| A | * claims 1,23; examples 1-6 * | 1-6,8-15 | C08K7/00 |
| X | US 2007/216067 A1 (BAHR STEVEN R [US] ET AL) 20 September 2007 (2007-09-20) | 7 | |
| A | * paragraph [0080] - paragraph [0081] * * paragraph [0099] - paragraph [0102] * * paragraph [0107]; claim 1; examples 6-9 * | 1-6,8-15 | |
| A | WO 2004/005376 A2 (MITSUBISHI POLYESTER FILM GMBH [DE]; KONRAD MATTHIAS [DE]; PEIFFER HER) 15 January 2004 (2004-01-15) * the whole document * | 1-15 | |
| A | EP 0 598 836 A1 (ALLIED SIGNAL INC [US]) 1 June 1994 (1994-06-01) * the whole document * | 1-15 | |
| A | WO 2005/068364 A1 (INDIAN PETROCHEMICALS CORP LTD [IN]; RELIANCE IND LTD [IN]; BANERJI SU) 28 July 2005 (2005-07-28) * the whole document * | 1-15 | TECHNICAL FIELDS SEARCHED (IPC) C08J C08K |

The present search report has been drawn up for all claims

| Place of search | Date of completion of the search | Examiner |
|---|---|---|
| Munich | 24 April 2012 | Puttins, Udo |

EPO FORM 1503 03.82 (P04C01)

**ANNEX TO THE EUROPEAN SEARCH REPORT
ON EUROPEAN PATENT APPLICATION NO.**

EP 11 19 0729

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2012

| Patent document cited in search report | | | Publication date | Patent family member(s) | | | Publication date |
|---|---|---|---|---|---|---|---|
| EP 0822163 | A2 | | 04-02-1998 | AT | 227693 | T | 15-11-2002 |
| | | | | CA | 2211603 | A1 | 02-02-1998 |
| | | | | DE | 69717020 | D1 | 19-12-2002 |
| | | | | DE | 69717020 | T2 | 10-07-2003 |
| | | | | EP | 0822163 | A2 | 04-02-1998 |
| | | | | JP | 4056592 | B2 | 05-03-2008 |
| | | | | JP | 10087320 | A | 07-04-1998 |
| US 2007216067 | A1 | | 20-09-2007 | NONE | | | |
| WO 2004005376 | A2 | | 15-01-2004 | NONE | | | |
| EP 0598836 | A1 | | 01-06-1994 | AT | 159270 | T | 15-11-1997 |
| | | | | CA | 2115255 | A1 | 04-03-1993 |
| | | | | DE | 69222773 | D1 | 20-11-1997 |
| | | | | DE | 69222773 | T2 | 12-02-1998 |
| | | | | EP | 0598836 | A1 | 01-06-1994 |
| | | | | JP | 2674720 | B2 | 12-11-1997 |
| | | | | JP | H06504810 | A | 02-06-1994 |
| | | | | US | 5747560 | A | 05-05-1998 |
| | | | | WO | 9304117 | A1 | 04-03-1993 |
| WO 2005068364 | A1 | | 28-07-2005 | DE | 112004002614 | T5 | 26-10-2006 |
| | | | | WO | 2005068364 | A1 | 28-07-2005 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **ANAND, K. A. ; JOSE, T. S. ; AGARWAL, U. S. ; SREEKUMAR, T. V. ; BANWARI, B. ; JOSEPH, R.** Pet-Swnt Nanocomposite Fibers through Melt Spinning. *International Journal of Polymeric Materials,* 2010, vol. 59, 438-449
- **HERNANDEZ, Y. ; NICOLOSI, V. ; LOTYA, M. ; BLIGHE, F. M. ; SUN, Z. ; DE, S. ; MCGOVERN, I. T. ; HOLLAND, B. ; BYRNE, M. ; GUN'KO, Y. K.** High-Yield Production of Graphene by Liquid-Phase Exfoliation of Graphite. *Nat Nano,* 2008, vol. 3, 563-568

- **KHAN, U. ; O'NEILL, A. ; LOTYA, M. ; DE, S. ; COLEMAN, J. N.** High-Concentration Solvent Exfoliation of Graphene. *Small,* 2010, vol. 6, 864-871
- **MUN, S. J. ; JUNG, Y. M. ; KIM, J.-C. ; CHANG, J.-H.** Poly(Ethylene Terephthalate) Nanocomposite Fibers with Functionalized Multiwalled Carbon Nanotubes Via in-Situ Polymerization. *Journal of Applied Polymer Science,* 2008, vol. 109, 638-646
- **KHAN, U. ; PORWAL, H. ; O'NEILL, A. ; NAWAZ, K. ; MAY, P. ; COLEMAN, J. N.** Solvent-Exfoliated Graphene at Extremely High Concentration. *Langmuir,* 2011, vol. 27, 9077-9082